# EUROPEAN PATENT SPECIFICATION

(11) **EP 0 238 174 B1**
(45) Date of publication and mention of the grant of the patent: **18.05.1994**
(21) Application number: 87300660.5
(22) Date of filing: 27.01.1987
(51) Int. Cl.: G02F 1/133

(54) **Colour liquid crystal electro-optical device and method of manufacturing the same**
Farb-Flüssigkristallvorrichtung und ihr Herstellungsverfahren
Dispositif à cristal liquide en couleurs et son procédé de fabrication

(30) Priority: 20.03.1986 JP 62390/86
(43) Date of publication of application: 23.09.1987
(73) Proprietor: SEIKO INSTRUMENTS INC., Tokyo 136 (JP)
(72) Inventor: Suginoya, Mitsuru, 31-1, Kameido 6-chome Koto-ku Tokyo (JP); Kamamori, Hitoshi, 31-1, Kameido 6-chome Koto-ku Tokyo (JP); Terada, Yumiko, 31-1, Kameido 6-chome Koto-ku Tokyo (JP)
(74) Representative: Sturt, Clifford Mark

(56) References cited:
- EP-A- 0 122 168
- EP-A- 0 157 486
- GB-A- 2 111 285
- GB-A- 2 187 026
- PATENT ABSTRACTS OF JAPAN, vol. 10. no. 149 (P-461)(2206), 30th May 1986 ; & JP-A-60003121

## Description

This invention relates to colour liquid crystal electro-optical devices, for example, display devices, and to methods of manufacturing the same.

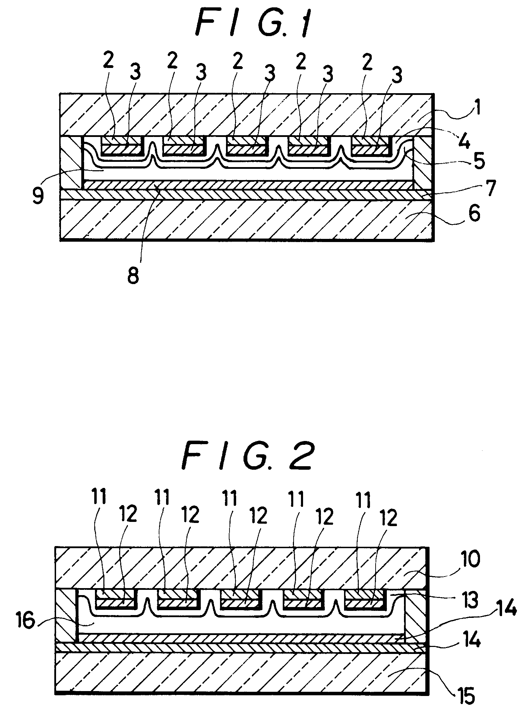

Figure 2 illustrates a multi-colour liquid crystal display device having electrodeposited colour filters. A transparent substrate 10 is made of glass. Electrodes 11 consisting of a transparent conductive film are formed on the substrate and patterned in the shape of numerals or characters. A colour filter 12 is formed by electrodepositing an electrodepositable polymer and a pigment. The colour filters 12 are of the same shape as the electrodes 11 on which they are deposited.

An orientation film 13 is formed by printing, spin coating or dipping a polyimide solution. A transparent second electrode 4 is formed on a transparent second substrate 15. Liquid crystal material 16 is sandwiched between the two substrates 10,15 to form a liquid crystal cell. When a voltage is applied across the liquid crystal cell and the cell is observed when interposed between a polariser and an analyser, the colours of the colour filters can be seen in the portions of the liquid crystal cell which are in a transmission mode while the remainder of the liquid crystal cell appears black because it does not permit the transmission of light. Thus the display device produces a multi-colour liquid crystal display for displaying the colours of the colour filters using the liquid crystal material as an optical shutter.

Conventionally, the orientation film is formed by a polyimide layer having its surface rubbed with, for example, a cloth in a predetermined direction so that the orientation film orients the molecules of the liquid crystal material in the predetermined direction. Polyester-melamine resins, acryl-melamine are also known as materials for the electrodeposited colour filters. When the polyimide orientation film is formed on a colour filter of a synthetic polymer, the polyimide film itself has poor adhesion to the colour filter. In addition, thermophysical behaviour of the polyimide film is different from that of the filter material. For these reasons, stress imposed at the interface between the polyimide film and the filter is likely to be relatively great, so that the reliability of orienting power of the polyimide orientation film is much reduced and the orienting power is lost within about 100 hours when the orientation film is left standing at a temperature of 80°C.

EP-A-0122168 discloses a colour liquid crystal electro-optical device comprising a pair of substrates arranged substantially parallel and mutually opposed, liquid crystal material confined between the substrates, electrodes deposited on the inward facing surfaces of the substrate, a colour filter deposited on one of the electrodes, a polyimide protective layer deposited on the colour filter and an orientation layer of silane formed over the polyimide protective layer.

One method of producing colour filters by electrodeposition is disclosed in US-A-4522691. This method affords an effective means capable of easily producing high precision colour filters.

The present invention seeks to provide an improved colour liquid crystal electro-optical device having reliable orientation characteristics, and electrodeposited colour filters with high adhesion and high orientation characteristics.

According to the present invention, a colour liquid crystal electro-optical display device comprises transparent electrodes deposited on the inward facing surfaces of two spaced substrates arranged substantially parallel and mutually opposed, a colour filter deposited on at least one electrode, a polymer protective layer deposited on the colour filter, an orientation layer formed over the polymer protective layer and liquid crystal material confined between the substrates, characterised in that the polymer protective layer contains an epoxy group, thereby providing high adhesion between the colour filter and the orientation layer and protecting the orientation layer from stress imposed at the interface therebetween.

The colour filter may be an electrodeposited colour filter. The colour filter may thus be formed by electrodeposition from a solution containing an electro-depositable polymer and pigments dispersed therein. Preferably, the electrodepositable polymer contains a polyester resin and a melamine resin or an acryl resin and a melamine resin.

The orientation layer may be selected from at least one of a polyimide polymer, a polyimide polymer and a cellulosic polymer.

In one embodiment, colour filters of different colours are on different electrodes.

According to another aspect of the present invention, there is provided a method of manufacturing a colour liquid crystal electro-optical device, including the steps of depositing at least one electrode on each of two substrates, depositing a colour filter on the electrode or electrodes of at least one substrate, depositing a polymer protective layer on the colour filter, forming an orientation layer on the colour filter, and confining a liquid crystal material between the substrates, characterised in that the polymer protective layer contains an epoxy group, adheres the orientation layer to the colour filter and protects the orientation layer from stress imposed at the interface between.

The invention is illustrated, merely by way of example, in the accompanying drawings, in which:-
Figure 1 is a longitudinal sectional view of a multi-colour liquid crystal display device according to the present invention; and
Figure 2 is a longitudinal sectional view of a known multi-colour liquid crystal display device.

Although the mechanism of degradation of orienting power of an orientation film has not been sufficiently clarified, the following mechanism may be assumed. One mechanism is the peeling of the orientation film from the substrate and the peeled portion cannot exert any controlling power on liquid crystal molecules so that orientation power is disturbed. Another mechanism is where energy having directivity to the surface of the orientation film that is provided by rubbing or the like cannot be kept due to subsequent thermal energy or the like and is offset by the latter. More definitely, the directivity is lost if the rearrangement of the molecules or the surface shape such as phase transition or melting occurs due to the thermal energy. If such a mechanism is to be applied to the orientation film provided on the colour filter, one of the problems is adhesion between the orientation film and the colour filter and the other is the stress between them.

Although it is not clear to which of these two mechanisms of degradation of the orienting power in the actual electrodeposited filter belongs, a method has now been found of disposing a protective film on the electrodeposited filter, which protective film has high adhesion to both the colour filter and the orientation film, as effective means for solving either of these problems. As a result of intensive studies, it has also now been found that a polymer containing an epoxy group is effective as a material for the protective layer.

The present invention will now be described in further detail with reference to the following Examples.

### EXAMPLE 1

Figure 1 illustrates an example of a multi-colour liquid crystal display device produced by a method according to the present invention.

Transparent electrodes 2 made of tin oxide were patterned and formed on a transparent glass substrate 1. This substrate was immersed in an electrodeposition solution having the following composition:

| **ELECTRODEPOSITION SOLUTION** | |
|---|---|
| polyester resin | 6.5 parts |
| melamine resin | 1.5 parts |
| ethyl cellosolve | 2.0 parts |
| water | 88.0 parts |
| red pigment | 2.0 parts |

A positive voltage was applied between the electrodes to be coloured red, while a negative voltage was applied to an opposed electrode. The substrate was removed from the electrodeposition solution, washed with water and then baked (or cured) at 200°C for about 30 minutes to form a red filter.

Electrodeposition solutions were prepared by replacing the red pigment in the electrodeposition solution described above by a green pigment and a blue pigment, respectively, and green and blue filters were likewise formed sequentially on other selected electrodes. A multi-colour filter 3 of red, green and blue was obtained. A film was formed on this filter by spin coating from a solution having the following composition and was heated and cured at 200°C for one hour to obtain a protective layer 4:

| | |
|---|---|
| polyamide resin | 2.5 parts |
| epoxy resin ("Shell Epikote" No 1002) | 2.5 parts |
| xylenol | 95.0 parts |

This protective layer was coated with a 10 wt % cyclohexanone solution of a polyimide of the following formula by spin coating: 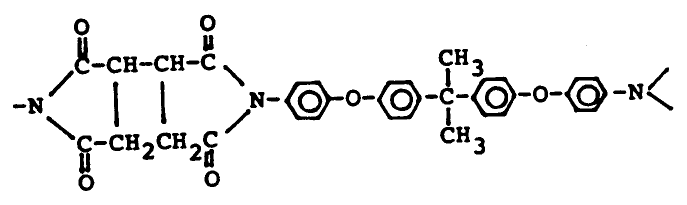
Baking was carried out at 200°C for one hour, and the surface was rubbed with a cotton cloth in a predetermined direction to obtain an orientation layer 5. Thereafter, a second transparent electrode 7 was disposed on a second glass substrate 6 and a further orientation film 8 was formed on the electrode 7 and rubbed similarly. This substrate was bonded to the opposed substrate 1 and liquid crystal material 9 was confined between them to prepare a multicolour liquid crystal display device. When the display device was left standing at a temperature of 80°C, the orientation state of the orientation layer remained excellent even after the passage of 1,000 hours and degradation of the orientation state could scarcely be observed.

### COMPARATIVE EXAMPLE 1

A multi-colour liquid crystal display device was produced in the same manner as in Example 1 except that the composition of the protective layer coating solution was changed as follows:

| | |
|---|---|
| polyamide resin | 2.5 parts |
| benzoguanamine resin | 2.5 parts |
| xylene | 95.0 parts |

When the resulting multi-colour liquid crystal display device was left standing at a temperature of 80°C, the orientation state almost completely disappeared after 300 hours.

### COMPARATIVE EXAMPLE 2

A multi-colour liquid crystal display device was produced in the same way as in Example 1 except that the protective layer of Example 1 was not used. When the resulting display device was left standing at a temperature of 80°C, the orientation state almost completely disappeared after the passage of 250 hours.

### EXAMPLE 2

The protective layer in Example 1 was formed by spin coating of a 10 wt % ethyl cellosolve acetate solution of an epoxy modified acrylic resin and baking at 200°C for one hour. Thereafter, the same steps were employed as those of Example 1 to produce a multi-colour liquid crystal display device, and substantially similar effects as in Example 1 were obtained.

### EXAMPLE 3

The protective layer in Example 1 was formed by spin coating of a 10 wt % ethyl cellosolve solution of an isocyanate-modified epoxy resin and baking at 200°C for one hour. Thereafter, the same steps were employed as those in Example 1 to produce a multi-colour liquid crystal display device and substantially similar effects as in Example 1 were obtained.

### EXAMPLE 4

The protective layer in Example 1 was formed by spin coating of a solution having the following composition and baking at 150°C for one hour:

| | |
|---|---|
| epoxy resin (Shell Epikote No. 1002) | 2.5 parts |
| phenolic resin | 2.5 parts |
| xylenol | 95.0 parts |

Thereafter, a multi-colour liquid crystal display device was produced in the same way as in Example 1 and substantially similar effects as in Example 1 were obtained.

### Example 5

Transparent electrodes 2 made of tin oxide were patterned and formed on a transparent glass substrate 1. This substrate was immersed in an electrodeposition solution having the following composition:

| **ELECTRODEPOSITION SOLUTION** | |
|---|---|
| acrylic resin | 6.5 parts |
| melamine resin | 1.5 parts |
| ethyl cellosolve | 2.0 parts |
| water | 88.0 parts |
| red pigment | 2.0 parts |

A positive voltage was applied between the electrodes to be coloured red, while a negative voltage was applied to an opposed electrode. The substrate was removed from the solution, washed with water and baked (or cured) at 200°C for about 30 minutes to form a red filter.

Electrodeposition solutions were prepared by replacing the red pigment in the electrodeposition solution described above by a green pigment and a blue pigment, respectively, and green and blue filters were likewise formed sequentially on other selected electrodes. A multi-colour filter 3 of red, green and blue was obtained. A film was formed on this filter by spin coating from each of the solutions having the compositions described in Examples 1 to 4 and was heated and cured at 200°C for one hour to obtain a protective layer 4.

Thereafter, the same steps were employed as those of Example 1 to produce a multi-colour liquid crystal display device and substantially similar effects as in Examples 1 to 4 were obtained.

As described in the foregoing Examples, the present invention provides a protective layer on the electrodeposited colour filter and further provides the orientation layer on the protective layer. This results in multi-colour liquid crystal electro-optical devices having extremely high reliability and long service life.

As described above, the present invention can provide such excellent advantages, but it is not possible to determine clearly whether the effects result from good adhesion between the colour filter and the orientation layer or from the protection layer. In fact, the effects may presumably result from the combined effect of both in view of the fact that the protective layer containing the epoxy coupling agent which provides a good effect in the examples has relatively high adhesion with the colour filter or polyamide and has excellent physio-chemical durability.

## Claims

1. A colour liquid crystal electro-optical display device comprising transparent electrodes (2,7) deposited on the inward facing surfaces of two spaced substrates (1,6) arranged substantially parallel and mutually opposed, a colour filter (3) deposited on at least one electrode (2), a polymer protective layer (4) deposited on the colour filter (3), an orientation layer (5) formed over the polymer protective layer (4) and liquid crystal material (9) confined between the substrates (1,6), characterised in that the polymer protective layer (4) contains an epoxy group, thereby providing high adhesion between the colour filter (3) and the orientation layer (5) and protecting the orientation layer (5) from stress imposed at the interface therebetween.

2. A device as claimed in claim 1, characterised in that the colour filter (3) is an electrodeposited colour filter.

3. A device as claimed in claim 2, characterised in that the colour filter (3) is formed by electrodeposition from a solution containing an electro-depositable polymer and pigments dispersed therein.

4. A device as claimed in claim 3, characterised in that the electro-depositable polymer contains a polyester resin and a melamine resin or an acrylic resin and a melamine resin.

5. A device as claimed in any preceding claim, characterised in that the orientation layer (5) is selected from at least one of a polyimide polymer, a polyamide polymer and a cellulosic polymer.

6. A device as claimed in any preceding claim, characterised by colour filters (3) of different colours on different electrodes.

7. A method of manufacturing a colour liquid crystal electro-optical device, including the steps of depositing at least one electrode (2,7) on each of two substrates (1,6) depositing a colour filter (3) on the electrode or electrodes (2) of at least one substrate (1), depositing a polymer protective layer (4) on the colour filter (3), forming an orientation layer (5) on the colour filter (3), and confining liquid crystal material (9) between the substrates (1,6), characterised in that the polymer protective layer (4) contains an epoxy group, adheres the orientation layer (5) to the colour filter (3) and protects the orientation layer (5) from stress imposed at the interface therebetween.

## Patentansprüche

1. Elektrooptische Farb-Flüssigkristall-Anzeigevorrichtung, umfassend transparente Elektroden (2, 7), welche auf den nach innen gerichteten Oberflächen von zwei beabstandeten, im wesentlichen parallel und einander gegenüberliegend angeordneten Substraten (1, 6) abgeschieden sind, einen auf mindestens einer Elektrode (2) abgeschiedenen Farbfilter (3), eine auf dem Farbfilter (3) abgeschiedene Polymerschutzschicht (4), eine über der Polymerschutzschicht (4) gebildete Orientierungsschicht (5) und zwischen den Substraten (1, 6) eingeschlossenes Flüssigkristallmaterial (9),
**dadurch gekennzeichnet,**
daß die Polymerschutzschicht (4) eine Epoxygruppe enthält, wodurch eine starke Adhäsion zwischen dem Farbfilter (3) und der Orientierungsschicht (5) vorgesehen und die Orientierungsschicht (5) vor an der dazwischen liegenden Grenzfläche einwirkender Belastung geschützt ist.

2. Vorrichtung nach Anspruch 1,
**dadurch gekennzeichnet,**
daß der Farbfilter (3) ein elektrolytisch abgeschiedener Farbfilter ist.

3. Vorrichtung nach Anspruch 2,
**dadurch gekennzeichnet,**
daß der Farbfilter (3) durch die elektrolytische Abscheidung aus einer Lösung, welche ein elektrolytisch abscheidbares Polymer und darin dispergierte Pigmente enthält, gebildet ist.

4. Vorrichtung nach Anspruch 3,
**dadurch gekennzeichnet,**
daß das elektrolytisch abscheidbare Polymer ein Polyesterharz und ein Melaminharz oder ein Acrylharz und ein Melaminharz enthält.

5. Vorrichtung nach einem der vorhergehenden Ansprüche,
**dadurch gekennzeichnet,**
daß die Orientierungsschicht (5) aus mindestens einem Polyimidpolymer, einem Polyamidpolymer oder einem Cellulosepolymer ausgewählt ist.

6. Vorrichtung nach einem der vorhergehenden Ansprüche,
**gekennzeichnet durch**
Farbfilter (3) verschiedener Farben auf verschiedenen Elektroden.

7. Verfahren zum Herstellen einer elektrooptischen Farb-Flüssigkristallvorrichtung, umfassend die Schritte des Abscheidens von wenigstens einer Elektrode (2, 7) auf jedem von zwei Substraten (1, 6), Abscheiden eines Farbfilters (3) auf der Elektrode oder den Elektroden (2) von mindestens einem Substrat (1), Abscheiden einer Polymerschutzschicht (4) auf dem Farbfilter (3), Bilden einer Orientierungsschicht (5) auf dem Farbfilter (3) und Einschließen von Flüssigkristallmaterial (9) zwischen den Substraten (1, 6),
**dadurch gekennzeichnet,**
daß die Polymerschutzschicht (4) eine Epoxygruppe enthält, welche die Orientierungsschicht (5) an den Farbfilter (3) bindet und die Orientierungsschicht (5) vor an der dazwischen liegenden Grenzfläche einwirkender Belastung schützt.

## Revendications

1. Dispositif d'affichage électrooptique en couleur à cristal liquide, comprenant des électrodes (2,7) transparentes déposées sur les faces tournées vers l'intérieur de deux substrats (1,6) disposés à distance l'un de l'autre, sensiblement parallèlement et mutuellement opposés, un filtre (3) coloré déposé sur au moins une électrode (2), une couche (4) de protection en polymère déposée sur le filtre (3) coloré, une couche (5) d'orientation formée sur la couche (4) de protection en polymère et du cristal liquide (9) confiné entre les substrats (1,6), caractérisé en ce que la couche (4) de protection en polymère contient un groupe époxyde de manière à donner une grande adhérence entre le filtre (3) coloré et la couche (5) d'orientation et à protéger la couche (5) d'orientation des contraintes appliquées à leur interface.

2. Dispositif suivant la revendication 1, caractérisé en ce que le filtre (3) coloré est un filtre coloré obtenu par électrodéposition.

3. Dispositif suivant la revendication 2, caractérisé en ce que le filtre (3) coloré, formé par électrodéposition, à partir d'une solution contenant un polymère susceptible d'être électrodéposé et des pigments dispersés en son sein.

4. Dispositif suivant la revendication 3, caractérisé en ce que le polymère susceptible d'être électrodéposé contient une résine de polyester et une résine de mélanine ou une résine acrylique et une résine de mélanine.

5. Dispositif suivant l'une des quelconques revendications précédentes, caractérisé en ce que la couche (5) d'orientation est choisie parmi l'un au moins d'un polymère de polyimide, d'un polymère de polyamide et d'un polymère cellulosique.

6. Dispositif suivant l'une des quelconques revendications précédentes, caractérisé par des filtres (3) colorés de couleurs différentes sur des électrodes différentes.

7. Procédé de fabrication d'un dispositif électrooptique en couleurs à cristal liquide, qui consiste à déposer au moins une électrode (2,7) sur chacun de deux substrats (1,6), a déposer un filtre (3) coloré sur l'électrode ou sur les électrodes (2) d'au moins un substrat (1), à déposer une couche (4) de protection en polymère sur le filtre (3) coloré, à former une couche (5) d'orientation sur le filtre (3) coloré, et à confiner du cristal liquide (9) entre les substrats (1,6), caractérisé en ce que la couche (4) de protection en polymère contient un groupe époxyde de manière à donner une grande adhérence entre le filtre (3) coloré et la couche (5) d'orientation et à protéger la couche (5) d'orientation des contraintes appliquées à leur interface.
